# EUROPÄISCHE PATENTSCHRIFT

(11) **EP 1 385 106 B1**
(45) Veröffentlichungstag und Bekanntmachung des Hinweises auf die Patenterteilung: **14.12.2005**
(21) Anmeldenummer: 02016447.1
(22) Anmeldetag: 23.07.2002
(51) Int. Cl.: G06F 17/60, G07F 7/10

(54) **Verfahren zur Vergabe und Gutschrift von Bonuspunkten**
Method for awarding bonus points
Méthode pour fournir un bonus

(43) Veröffentlichungstag der Anmeldung: 28.01.2004
(73) Patentinhaber: Scheidt & Bachmann GmbH, D-41238 Mönchengladbach (DE)
(72) Erfinder: Miller, Norbert, Dr., 41063 Mönchengladbach (DE); Schneider, Markus, Dipl.Ing., 52477 Alsdorf (DE)
(74) Vertreter: Stenger, Watzke & Ring

(56) Entgegenhaltungen:
- EP-A- 1 431 892
- WO-A-02/052462
- DE-A- 19 933 694
- FR-A- 2 760 549
- US-A- 5 202 826
- US-A- 5 689 100

## Beschreibung

Die Erfindung betrifft ein Verfahren zur Vergabe und Gutschrift von Bonuspunkten bei der Bezahlung mittels einer Bezahlkarte, vorzugsweise einer Geldkarte.

Bonussysteme sind aus dem Stand der Technik hinlänglich bekannt und werden in der Praxis insbesondere dazu eingesetzt, Neukunden zu gewinnen bzw. die bestehende Kundschaft zu binden. Sinn und Zweck eines Bonussystems ist es dabei, dem Kunden zusätzliche Anreize zu geben, ein bestimmtes Produkt zu kaufen. Der Käufer bekommt dann mit dem Erwerb dieses Produktes in Form einer Gutschrift sogenannte Bonuspunkte, die er sammeln und bei Erreichen einer bestimmten, vorgegebenen Mindestpunktzahl gegen Gratisvergaben eintauschen kann. Der Anreiz, ein bestimmtes Produkt zu kaufen, besteht mithin in dem Umstand, allein durch Sammeln der Bonuspunkte einen Zugewinn erzielen zu können. Gegenüber Konkurrenzprodukten steigt so in vorteilhafter Weise die Kaufattraktivität.

Vorbekannte Bonussysteme sind beispielsweise die von manchen Fluggesellschaften angebotenen Vielfliegerprogramme oder die von einzelnen Kaufhäusern oder Geschäftszusammenfassungen offerierten Vielkäuferprogramme. Vorgesehen ist bei diesen Systemen, daß sich ein teilnehmen zu wünschender Kunde zunächst registrieren lassen muß. Mit der Registrierung bekommt der Kunde eine auf ihn ausgestellte Kundenkarte, die je nach ausstellendem Unternehmen beispielsweise als "Miles and More"- oder "Payback"- Karte bezeichnet wird. Diese Karte ist vom Kunden bei der Abwicklung einer Buchung oder eines Kaufes vorzulegen. Erfolgt eine Vorlage dieser zusätzlichen Kundenkarte nicht, beispielsweise, weil diese zuhause vergessen wurde, so kann eine Gutschrift im Rahmen eines solchen Bonusprogramms nachteiligerweise nicht durchgeführt werden.

Bei jedem der vorgenannten Bonussysteme erfolgt die Vergabe von Bonuspunkten durch technische Einrichtungen an dem jeweiligen Ort, wo die Kundenkarte (das ldentifizierungsmedium) zur Registrierung vorgelegt wird.

Die FR 2 760 549 offenbart ein Verfahren und System zur Durchführung finanzieller Transaktionen mit einer Bezahlkarte und unter einer Vergabe von Treueboni. Zur Durchführung einer Bezahltransaktion wird eine Bezahlkarte in ein Kartenlesegerät einer Verkaufsstelle eingeführt. Nach einem Authentifizierungs-, Identifizierungs- und Kontrollvorgang werden Informationen betreffend die Identität des Karteninhabers, die Transaktion und den Transaktionsbetrag im Zahlterminal gespeichert und ein Nachlaß errechnet. Die Transaktionsdaten werden vom Zahlterminal an ein Verwaltungszentrum gesendet, dort gesammelt, gespeichert und schließlich an verschiedene Banken zur Durchführung der finanziellen Transaktionen weitergeleitet. Nachteilig an diesem Verfahren ist, daß in die sicherheitssensible und den Regelungen des Datenschutzes unterliegende Übertragung der Transaktionsdaten von dem Bezahlungsterminal zu den Bankrechnem eingegriffen wird.

Die DE 199 33 694 A1 offenbart ein Bezahlterminal, welches mit einem Hintergrundterminal und einer Bezahlkarte koppelbar ist und das den Ablauf eines Zahlvorgangs steuert. Wird während eines Bezahlvorgangs festgestellt, daß dem Inhaber der Bezahlkarte Bonuspunkte gewährt werden, so werden die Boni als Daten vom Bezahlterminal auf die Bezahlkarte übertragen und auf diese abgespeichert. Zu diesem Zweck weist das Bonusprogramm programmierbare Entscheidungsnetzwerke auf.

Die WO 02/052462 A1 offenbart ein Verfahren und ein System für eine Entwicklung, Management und Belohnung von Kundentreue. Der Kunde wird beim Zahlvorgang durch den Gebrauch einer Treuekarte identifiziert. Die Einzelheiten der Käufe des Kunden werden an ein digitales Entlohnungssystem gesendet, welches digitale Bonuspunkte errechnet und diese einem Treuekonto des Kunden gutschreibt. Der Kunde kann durch Gebrauch eines Mobilfunkendgerätes oder das Internet auf dieses Treuekonto zugreifen und bestimmen, auf welche Weise er die digitalen Bonuspunkte verwenden möchte.

Die EP 1 431 892 A1 beschreibt ein Verfahren zur Vergabe von Bonuspunkten bei Bezahlung mit einer herkömmlichen Kredit-oder Debit-Karte. Hier bird mit der Bezahlkarte an einem Terminal ein Bezahlvorgang ausgeführt und von diesem Terminal Transaktionsdaten an einen Bonusserver übertragen. Dabei ist es dem Nutzer auch möglich seinen Bonus-Punktestand von einem Terminal unter Verwendung der Bezahlkarte abzufragen. Die EP 1 431 892 A1 wurde veröffentlicht am 23.06.2004 und beansprucht das Prioritätsdatum 28.09.2001.

Nachteil des beschriebenen Stands der Technik ist, daß sämtliche Zahlungs- bzw. Buchungsterminals unterschiedlicher Ausführungen und von unterschiedlichen Herstellern mit der zusätzlichen Funktionalität der Bonuspunktvergabe ausgestattet werden müssen. Zur Teilnahme an einem Bonusprogramm ist teilweise eine zusätzliche Kundenkarte notwendig.

**Aufgabe** der Erfindung ist es daher, ein Verfahren der vorgenannten Art bereitzustellen, das unter Vermeidung der vorbeschriebenen Nachteile auf einfache Weise und ohne zusätzlichen Handlingaufwand durchführbar ist, nicht in sicherheitssensible Datenübertragungen eingreift und dem Benutzer zudem die Möglichkeit der Einsichtnahme in seine bereits erhaltenen Gutschriften erlaubt.

**Gelöst** wird diese Aufgabe durch Verfahren zur Vergabe und Gutschrift von Bonuspunkten bei der Bezahlung mittels einer Bezahlkarte, vorzugsweise mit einer Geldkarte, bei dem unter Verwendung nur der Bezahlkarte die Bezahldaten einer jeden Bezahltransaktion in einer mit einem Bankrechner kommunikationstechnisch in Verbindung stehenden Leseeinheit erfaßt und in einem ersten Datenstrom von der Leseeinheit direkt an den Bankrechner zur Durchführung der Transaktion übertragen werden, die Bezahldaten oder zumindest Teile hiervon in einem weiteren Datenstrom getrennt vom ersten Datenstrom an eine separate Rechnereinheit übertragen und dort gespeichert werden, wobei den Bezahldaten oder Teilen hiervon in einer von der separaten Rechnereinheit durchzuführenden, vorgebbaren Vergleichsrechnung Bonuspunkte zugeordnet und durch einen entsprechenden Eintrag in eine dafür vorgesehene Datenbank gutgeschrieben werden und die Höhe bereits erzielter Gutschriften über eine mit der separaten Rechnereinheit (5) kommunikationstechnisch in Verbindung stehenden Ausgabeeinheit durch den Nutzer unter Verwendung der Bezahlkarte abgefragt werden kann und die an die separate Rechnereinheit (5) übertragenen Bezahldaten (4) oder Teile hiervon (6) einer Plausibilitätsprüfung unterzogen werden.

Im Unterschied zum Stand der Technik sieht das erfindungsgemäße Verfahren die Verwendung einer Karte mit kombinierter Funktionalität vor, bestehend aus einer bargeldlosen Bezahlfunktion und einer Bonusfunktion, die von den meisten chipbehafteten Karten mit der Funktion "GeldKarte" erbracht werden, und bieten damit dem Karteninhaber die Sicherheit, ihre Bonuskarte bei der Bezahlung immer im Zugriff zu haben. Desweiteren wird nicht in die sicherheitssensible und den Regelungen des Datenschutzes unterliegende Übertragung der Transaktionsdaten von dem Bezahlungsterminal zu den Bankrechnem eingegriffen.

Mit dem erfindungsgemäßen Verfahren ist vorgesehen, daß es zur Vergabe und Gutschrift von Bonuspunkten allein ausreichend ist, die Bezahldaten bzw. Teile hiervon an eine separate Rechnereinheit zu übertragen, mit welchen dann die Gutschrift der eigentlichen Bonuspunkte vorgenommen wird. Im Unterschied zu herkömmlichen Systemen werden also für die Bonuspunkte-Vergabe keine zusätzlichen Daten generiert, statt dessen werden lediglich die zur Durchführung einer Bezahltransaktion vorzusehenden Bezahldaten aufgegriffen und für die Gutschrift von Bonuspunkten einer separaten Rechnereinheit zugeführt. Auf einfache Weise kann somit eine automatische Zuordnung und Gutschrift von Bonuspunkten erfolgen, ohne daß es erforderlich wäre, zusätzliche Kunden- oder Verbrauchsdaten zu erzeugen, abzuspeichern oder zu verwalten. Das erfindungsgemäße Verfahren kann daher in vorteilhafter Weise einfach und ohne zusätzlichen Handlingaufwand durchgeführt werden.

Ein weiterer Vorteil des erfindungsgemäßen Verfahrens liegt in dem Umstand begründet, daß bereits bestehende Einrichtungen zur Abwicklung von Bezahltransaktionen genutzt werden können und eine Umrüstung der bestehenden Einrichtungen nicht erforderlich ist. Insgesamt eröffnet das erfindungsgemäße Verfahren somit die Möglichkeit, ein Verfahren zur Vergabe und Gutschrift von Bonuspunkten effizient und auf einfache Weise durchzuführen, so daß die im Rahmen einer Durchführung eines solchen Verfahrens entstehenden Kosten auf ein Minimum reduziert werden können. Die Verwendung einer separaten Rechnereinheit bietet dabei dem Benutzer zudem den Vorteil, jederzeit Einsicht in seine bereits erhaltenen Gutschriften zu bekommen, so daß der Anreiz, das Bonussystem zukünftig stärker zu nutzen, weiterhin ansteigt.

Vorgesehen ist mit der Erfindung, daß produkt- bzw. herstellerübergreifend das Bonussystem an eine Bezahlkarte, vorzugsweise eine Geldkarte gekoppelt ist. Hiermit einhergehend ergibt sich, daß eine Gutschrift von Bonuspunkten schon allein durch die Benutzung der Bezahlkarte und zwar unabhängig von dem jeweils gekauften Produkt oder in Anspruch genommenen Dienstleistungen entsteht. Es wird somit ein Bonussystem zur Verfügung gestellt, daß produkt- oder herstellerübergreifend wirkt und dem Benutzer somit den Anreiz gibt, die Bezahlkarte vorzugsweise gegenüber anderen Bezahlsystemen einzusetzen. Insofern eignet sich das vorbeschriebene Verfahren insbesondere für Banken und Geldinstitute, die die Verwendung bestimmter Bezahlkarten, vorzugsweise Geldkarten, forcieren möchten. Gleiches gilt für Unternehmen, Großgeschäfte oder den Einzelhandel, die gleichfalls die Bezahlung mittels Bezahlkarte, vorzugsweise mittels Geldkarte, vorantreiben möchten. Bei Geldkarten ist dabei von Vorteil, daß anders als bei beispielsweise Kreditkarten, eine zusätzliche Provision an das kartenverwaltende Unternehmen nicht zu entrichten ist. Anders als bei Kreditkarten erfolgt eine Bezahlung bei der Verwendung von Geldkarten auch ohne zeitliche Verzögerung, so daß auch diesbezüglich der Einsatz von Geldkarten für Unternehmen, Geschäfte oder dergleichen von Vorteil ist. Der Einsatz des erfindungsgemäßen Verfahrens schafft daher ein Instrument sowohl für Banken, Unternehmen, Geschäfte oder dergleichen, dem Kunden oder Benutzer einen zusätzlichen Anreiz zu schaffen, insbesondere Geldkarten anstelle anderer Bezahlungsmittel zu verwenden.

Unter Geldkarte wird dabei in diesem Zusammenhang die elektronische Kleingeldbörse verstanden, die auf dem Chip der meisten in Deutschland ausgegebenen EC-Karten verfügbar ist. Kunden können durch Einführen der mit einem solchen Chip versehenen EC-Karte in eine entsprechende Aufladestation Geld in elektronischer Form auf den Chip "aufladen". Ein Bezahlvorgang erfolgt in umgekehrter Reihenfolge, das heißt eine mit einem aufgeladenen Chip versehene EC-Karte ist in eine entsprechende Ausleseeinrichtung einzuführen, die dann entsprechend des zu bezahlenden Betrages den auf dem Chip der Karte gespeicherten Geldbetrag verringert. Anders als bei herkömmlichen Bezahlkarten, wie beispielsweise der Kreditkarte, erfolgt eine Datenerfassung mithin nicht über Magnetstreifen und Magnetstreifenauswerteeinrichtungen, sondern über den auf der Karten installierten Chip.

Erfolgt nun ein Bezahlvorgang, das heißt wird die mit dem Chip versehene Geldkarte in eine dafür vorgesehene Ausleseeinheit eingeführt, so wird die vom Benutzer der Karte autorisierte Zahlung dadurch eingeleitet, daß Geld in elektronischer Form von dem Chip der Karte herunter geladen und als Bezahldaten an das entsprechende Bankinstitut übertragen werden. Inhalt der Bezahldaten ist dabei unter anderem auch der Empfänger und der zu bezahlende Betrag. Erfindungsgemäß können nun diese Bezahldaten oder zumindest Teile hiervon verwendet werden, um dem zahlenden Kunden die Vergabe und Gutschrift von Bonuspunkten zu ermöglichen, wobei eine Gutschrift der Bonuspunkte in Abhängigkeit einer vorgebbaren Vergleichsrechnung durchgeführt wird. Erfindungsgemäß erfolgt dabei die Vergleichsrechnung auf einem separaten Rechner, der die für eine Vergleichsrechnung notwendigerweise erforderlichen Bezahldaten sowie die sich daraus ergebenden Bonuspunkte abspeichert und verwaltet. Dies geschieht vorzugsweise mittels dafür vorgesehener Datenbanken, wobei eine Datenbank für die übertragenen Bezahldaten und eine weitere Datenbank für die Verwaltung der Bonuspunkte vorgesehen sein kann.

Die an die separate Rechnereinheit übertragenen Bezahldaten oder Teile hiervon werden einer Plausibilitätsprüfung unterzogen, bevor eine Vergleichsrechnung durchgeführt wird. Im Anschluß an eine erfolgreiche Plausibilitätsprüfung kann sodann die Gutschrift der Bonuspunkte erfolgen. Inhalt einer solchen Plausibilitätsprüfung kann beispielsweise die Überprüfung des bezahlten Geldbetrages in Abhängigkeit des der Karte überhaupt zur Verfügung stehenden Geldausgabevolumens sein. Denkbar ist dabei in diesem Zusammenhang, daß eine Geldkarte nicht nur über denjenigen Geldbetrag verfügen kann, der zuvor auf den Chip der Karte aufgeladen wurde, sondern daß es statt dessen auch möglich ist, unabhängig von einem zuvor auf den Chip aufgeladenen Geldbetrag Zahlungen mit der Geldkarte vorzunehmen, wobei die erfolgten Zahlungen automatisch vom laufenden Konto des Benutzers abgebucht werden.

Gemäß einem weiteren Merkmal der Erfindung erfolgt eine Übertragung der Bezahldaten oder Teilen hiervon an die separate Rechnereinheit anonymisiert. Dies kann beispielsweise dadurch erfolgen, daß kundenunabhängig nur die Kartennummer und etwaige zusätzliche Informationen an die separate Rechnereinheit übertragen werden. Eine direkte Zuordnung des tatsächlichen Karteninhabers einerseits und der mit dieser Karte erfolgten Bezahlung andererseits ist somit nicht möglich. Im Falle der GeldKarte" sind die Bezahldaten grundsätzlich anonym gegenüber dem Karteninhaber, weil für das einzige auf den Inhaber verweisende Kriterium "Kartennummer" ausschließlich den sogenannten Börsenevidenzzentralen die Bezugsdaten zum Karteninhaber unter strengem Verschluß vorliegen.

Gemäß einem weiteren Merkmal des erfindungsgemäßen Verfahrens erfolgt eine Übertragung der Bezahldaten oder Teilen hiervon an die separate Rechnereinheit verschlüsselt. In vorteilhafter Weise wird hierdurch erreicht, daß es unbefugten Dritten nicht möglich ist, Einblick in die übersandten Bezahldaten oder Teilen hiervon zu nehmen. In Kombination mit der anonymisierten Zuordnung entsteht somit ein aus zwei Stufen bestehendes Sicherheitssystem, so daß eine Übermittlung der Bezahldaten oder Teilen hiervon sehr sicher durchzuführen ist. Dabei kann in vorteilhafter Weise auf die von den Bankinstituten bereits vielfach eingesetzte und erprobte Verschlüsselung zurückgegriffen werden. Erfindungsgemäß ist nämlich vorgesehen, daß nicht für eine Bestimmung und Gutschrift der Bonuspunkte zusätzliche Daten generiert werden, sondern daß die im Rahmen eines Bezahlvorgangs sowieso anfallenden Bezahldaten für die Gutschrift von Bonuspunkten verwendet werden. Da diese Bezahldaten für eine Übermittlung an das jeweilige Kreditinstitut bereits in verschlüsselter Form vorliegen, kann diese Verschlüsselung zugleich auch für die Übertragung an die separate Rechnereinheit genutzt werden. Ein zusätzlicher Verfahrensschritt für die Anonymisierung bzw. Verschlüsselung der Bezahldaten oder Teilen hiervon für die Übertragung an die separate Rechnereinheit ist mithin nicht erforderlich.

Gemäß einem weiteren Merkmal der Erfindung wird als Bezahldaten oder Teilen hiervon an die separate Rechnereinheit zumindest die Kartennummer übertragen. In der Regel weisen die Bezahldaten eine Länge von 100 Byte auf und enthalten im wesentlichen die eindeutige Kartennummer der Kundenkarte, die eindeutige Kartennummer des Bezahlterminals, Datum und Uhrzeit der Bezahlung und den Zahlbetrag. Aus der Kartennummer des Bezahlterminals läßt sich der genaue Bezahlort ableiten. Ferner enthalten die Bezahldaten eine eindeutig fortlaufende Sequenznummer, eine eindeutige Kassenschnittnummer, die sich je nach Kassenschnitt fortlaufend erhöht sowie eine zusätzliche Signatur. Für die Vergabe von Bonuspunkten ist es jedoch nicht erforderlich, all diese Einzeldaten an die separate Rechnereinheit zu übertragen. Im einfachsten Fall ist es ausreichend, nur die eindeutige Kartennummer zu übertragen. Die von der separaten Rechnereinheit durchzuführende Vergleichsrechnung erfolgt dann anhand der übermittelten Kartennummer, wobei eine Gutschrift pro Bezahltransaktion erfolgt. Bei dieser einfachsten Verfahrensdurchführung erfolgt mithin eine Gutschrift von Bonuspunkten pro Einsatz der Bezahlkarte, das heißt pro durchgeführter Bezahltransaktion. Eine Bonusgutschrift erfolgt sodann zu der jeweils angegebenen Kartennummer, so daß mit ansteigender Häufigkeit der Verwendung dieser Bezahlkarte die damit erreichten Bonuspunkte dieser Karte unter Verwendung der Kartennummer eindeutig zugeordnet und gutgeschrieben werden können.

Gemäß einem alternativen Vorschlag kann vorgesehen sein, als Bezahldaten oder Teile hiervon an die separate Rechnereinheit den Bezahlbetrag zu übermitteln. In diesem Fall kann die Vergleichsberechnung anhand des je Bezahltransaktion geleisteten Bezahlbetrages durchgeführt werden, wobei eine Gutschrift in Abhängigkeit der Höhe des Geldbetrages erfolgt. Bei diesem Alternativvorschlag ergibt sich mithin eine Bonusgutschrift in Abhängigkeit des mit der Geldkarte entrichteten Geldbetrages. Vorgesehen sein kann beispielsweise eine fest vorgeschriebene Bonizuordnung pro entrichtetem Euro.

Gemäß einem weiteren Merkmal der Erfindung kann die Höhe der bereits erzielten Gutschriften unter Angabe der Kartennummer über eine entsprechende Ausgabeeinheit abgefragt werden. Dem Kunden wird somit die Möglichkeit gegeben, die Summe seiner bisher gesammelten Bonuspunkte in Erfahrung zu bringen und so abschätzen zu können, ob er bereits die Mindest-Bonuszahl für den Erhalt einer Vergütung erreicht hat oder ob und wenn ja wieviele Bonuspunkte er noch ansammeln muß, um die von ihm gewünschte Vergütung zu erzielen. Die Angabe der insgesamt erzielten Bonuspunkte kann hierbei in vorteilhafter Weise über separate Informationsausgabestellen erreicht werden, die mit der separaten Rechnereinheit direkt in kommunikationstechnischer Verbindung stehen. Dabei können einfache Anzeigegeräte verwendet werden, in die die Geldkarte einzuführen ist und die nach einem Auslesen der Geldkarte eine Verbindung zur separaten Rechnereinheit aufbauen und die für diese Geldkarte bereits angesammelten Bonuspunkte in der Summe anzeigen. Selbstverständlich können auch Einzelposten aufgelistet werden, so daß der Kunde erkennen kann, wie sich die Summe der von ihm ersammelten Bonuspunkte insgesamt zusammensetzt. Eine Abfrage der insgesamt erzielten Bonuspunkte kann in vorteilhafter Weise auch über das Internet erfolgen, wobei eine Eingabe der Kartennummer dann über die Tastatur des jeweiligen Rechners zu erfolgen hat.

Gemäß einem weiteren Merkmal der Erfindung werden die erfaßten Bezahldaten oder Teile hiervon in einer zweiten Vergleichsrechnung statistisch ausgewertet. Der Erhalt von statistischen Daten ist insbesondere für die Anbieter des erfindungsgemäßen Verfahrens von Nutzen. So lassen sich aus den statistischen Daten Verhaltensmuster der die Geldkarten benutzenden Kunden ablesen, so daß ein auf das Kundenverhalten besser abgestimmtes Vorgehen umgesetzt werden kann.

Gemäß einem weiteren Merkmal der Erfindung erfolgt nach einer Inanspruchnahme erzielter Gutschriften die Verringerung des Gutschriften-Kontos. Vorgesehen ist mit diesem Verfahrensschritt, daß nach der Inanspruchnahme angesammelter Bonuspunkte, die somit der Bonuspunkte um die Anzahl der durch die Inanspruchnahme verbrauchten Bonuspunkte verringert wird. Es ist also nicht erforderlich, die genaue Anzahl der auf dem Gutschriften-Konto angesammelten Bonuspunkte durch die Inanspruchnahme aufzubrauchen, vielmehr kann eine Inanspruchnahme einer solchen Größenordnung entsprechen, die die auf dem Gutschriften-Konto angegebene Anzahl der Bonuspunkte nicht übersteigt. Es ist somit möglich, die Summe der angesammelten Bonuspunkte durch eine Reihe unterschiedlicher und voneinander getrennt durchgeführter Inanspruchnahmen aufzubrauchen.

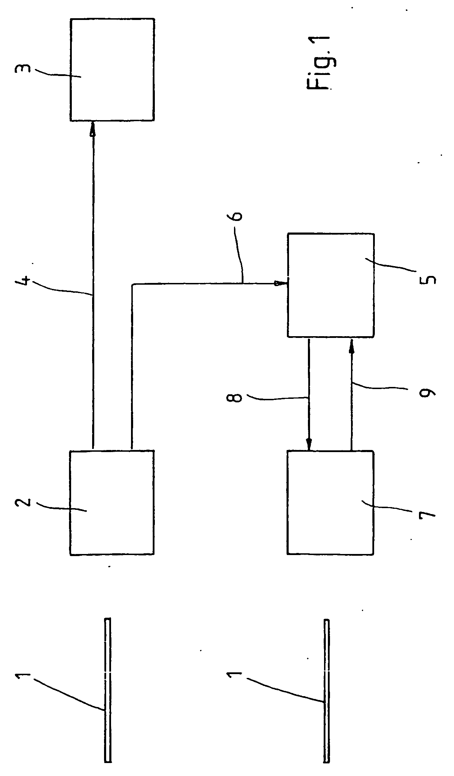

Weitere Vorteile und Merkmale der Erfindung ergeben sich aus der Beschreibung anhand der Figur 1. Diese zeigt in schematischer Darstellung die Durchführung des erfindungsgemäßen Verfahrens.

Dargestellt ist mit Fig. 1 eine Geldkarte 1. Diese wird in eine dafür vorgesehene Leseeinheit 2 eingebracht. Die Leseeinheit 2 steht mit einem Bankrechner 3 kommunikationstechnisch in Verbindung, wobei nach der Einleitung einer Bezahltransaktion die Leseeinheit 2 die Geldkarte 1, das heißt den auf der Geldkarte 1 angeordneten Chip ausliest und die der Bezahltransaktion entsprechenden Bezahldaten 4 von der Leseeinheit 2 an den Bankrechner 3 überträgt. Der Bankrechner 3 übernimmt dann in aus dem Stand der Technik bekannter Weise die Verarbeitung der an ihn übertragenen Bezahldaten 4, was in der Konsequenz dazu führt, daß der mit der Geldkarte bezahlte Betrag dem Kartenbenutzer abgezogen und dem Empfänger gutgeschrieben wird.

Die Bezahldaten 4 bzw., wie in Fig. 1 dargestellt, nur Teildaten 6 werden zur Durchführung des erfindungsgemäßen Verfahrens an eine separate Rechnereinheit 5 übermittelt. Die Daten 6 können im einfachsten Fall nur die Kartennummer der Geldkarte 1 umfassen. Darüber hinaus können aber auch weitere Daten 6 übermittelt werden, wie beispielsweise der Geldbetrag, der Bezahlort, die Bezahlzeit, das Bezahldatum und dergleichen. Die von der separaten Rechnereinheit 5 empfangenen Daten 6 werden einer Plausibilitätsprüfung unterzogen. Nach positiver Prüfung erfolgt sodann anhand einer vorgebbaren Vergleichsrechnung eine Zuordnung von Bonuspunkten und eine entsprechende Gutschrift der zugeordneten Bonuspunkte in eine dafür vorgesehene Datenbank. Als Vergleichsrechnung kann beispielsweise vorgesehen sein, daß pro Bezahltransaktion ein Bonuspunkt vergeben wird. Auch kann mit einer Vergleichsrechnung bestimmt werden, daß in Abhängigkeit des bezahlten Geldbetrages eine Zuordnung von Bonuspunkten erfolgt, wobei beispielsweise vorgesehen sein kann, daß pro bezahltem Euro ein Bonuspunkt zugeordnet wird. In der Datenbank der Rechnereinheit 5 werden die insgesamt angesammelten Bonuspunkte aufsummiert, so daß innerhalb der Datenbank nicht nur der Erhalt der Einzelbonuspunkte, sondern auch die Gesamtsumme der insgesamt erzielten Bonuspunkte entnommen werden kann.

Angeschlossen an die zentrale Rechnereinheit 5 kann eine in Fig. 1 mit 7 bezeichnete Ausgabeeinheit sein. Dabei kann es sich um ein zusätzliches Endgerät oder um einem vom Benutzer verwendeten Computer handeln, der beispielsweise über eine Internetverbindung mit der Rechnereinheit 5 in kommunikationstechnischer Verbindung steht. Bei der Verwendung einer separaten Ausgabeeinheit wird zur Erfragung der insgesamt angesammelten Bonuspunktesumme die Geldkarte 1 in die Ausgabeeinheit 7 eingeführt. Diese ermittelt in einem Auslesevorgang die Kartennummer und übermittelt eine entsprechende Identifikation 9, die beispielsweise aus Kartennummer und zugehörigem Sicherheitscode besteht, an die Rechnereinheit 5. Diese wiederum ermittelt den angefragten Wert unter Verwendung der erfindungsgemäß vorgesehenen Datenbank und übermittelt die Bonusinformation 8 an die Ausgabeeinheit 7. Bei der Verwendung eines an das Internet angeschlossenen Rechners anstelle einer separaten Ausgabeeinheit kann die Übermittlung der Kartennummer und eines etwaigen Sicherheitscodes über die Tastatur des Rechners erfolgen.

### Bezugszeichenliste:

- 1: Geldkarte
- 2: Leseeinheit
- 3: Bankrechner
- 4: Bezahldaten
- 5: Rechnereinheit
- 6: Daten
- 7: Ausgabeeinheit
- 8: Bonusinformation
- 9: Identifikation

## Patentansprüche

1. Verfahren zur Vergabe und Gutschrift von Bonuspunkten bei der Bezahlung mittels einer Bezahlkarte (1), vorzugsweise mit einer Geldkarte, bei dem unter Verwendung nur der Bezahlkarte (1) die Bezahldaten (4) einer jeden Bezahltransaktion in einer mit einem Bankrechner (3) kommunikationstechnisch in Verbindung stehenden Leseeinheit (2) erfaßt und in einem ersten Datenstrom von der Leseeinheit (2) direkt an den Bankrechner (3) zur Durchführung der Transaktion übertragen werden,
die Bezahldaten (4) oder Teile hiervon (6) in einem weiteren Datenstrom getrennt vom ersten Datenstrom an eine separate Rechnereinheit (5) übertragen und dort gespeichert werden,
wobei den Bezahldaten (4) oder Teilen hiervon (6) in einer von der separaten Rechnereinheit (5) durchzuführenden, vorgebbaren Vergleichsrechnung Bonuspunkte zugeordnet und durch einen entsprechenden Eintrag in eine dafür vorgesehene Datenbank gutgeschrieben werden, die Höhe bereits erzielter Gutschriften über eine mit der separaten Rechnereinheit (5) kommunikationstechnisch in Verbindung stehenden Ausgabeeinheit (7) durch den Nutzer unter Verwendung der Bezahlkarte (1) abgefragt werden kann und die an die separate Rechnereinheit (5) übertragenen Bezahldaten (4) oder Teile hiervon (6) einer Plausibilitätsprüfung unterzogen werden.

2. Verfahren nach Anspruch 1, **dadurch gekennzeichnet, daß** die Gutschrift der Bonuspunkte im Anschluß an eine erfolgreiche Plausibilitätsprüfung durchgeführt wird.

3. Verfahren nach Anspruch 1 oder 2, **dadurch gekennzeichnet, daß** die Übertragung der Bezahldaten (4) oder Teilen hiervon (6) an die separate Rechnereinheit (5) anonymisiert erfolgt.

4. Verfahren nach einem der vorhergehenden Ansprüche, **dadurch gekennzeichnet, daß** als Bezahldaten (4) oder Teilen hiervon (6) an die separate Rechnereinheit (5) zumindest die Kartennummer übertragen wird.

5. Verfahren nach Anspruch 4, **dadurch gekennzeichnet, daß** die Vergleichsrechnung anhand der übermittelten Kartennummer durchgeführt wird, wobei eine Gutschrift pro Bezahltransaktion erfolgt.

6. Verfahren nach Anspruch 5, **dadurch gekennzeichnet, daß** die Höhe der Gutschrift pro Bezahltransaktion mit der Anzahl der bereits abgewickelten Bezahltransaktionen steigt.

7. Verfahren nach einem der Ansprüche 1 bis 4, **dadurch gekennzeichnet, daß** als Bezahldaten (4) oder Teilen hiervon (6) an die separate Rechnereinheit (5) zusätzlich der Bezahlbetrag übertragen wird.

8. Verfahren nach Anspruch 7, **dadurch gekennzeichnet, daß** die Vergleichsrechnung anhand des je Bezahltransaktion geleisteten Bezahlbetrages durchgeführt wird, wobei eine Gutschrift in Abhängigkeit der Höhe des Bezahlbetrages erfolgt.

9. Verfahren nach einem der vorhergehenden Ansprüche, **dadurch gekennzeichnet, daß** die Höhe bereits erzielter Gutschriften unter Angabe der Kartennummer über eine entsprechende Ausgabeeinheit (7) abgefragt werden kann.

10. Verfahren nach einem der vorhergehenden Ansprüche, **dadurch gekennzeichnet, daß** die erfaßten Bezahldaten (4) oder Teile hiervon (6) in einer zweiten Vergleichsrechnung statistisch ausgewertet werden.

11. Verfahren nach einem der vorhergehenden Ansprüche, **dadurch gekennzeichnet, daß** nach einer Inanspruchnahme erzielter Gutschriften eine entsprechende Verringerung des Gutschriften-Kontos erfolgt.

## Claims

1. Method of awarding and crediting bonus points when payment is made by means of a payment card (1), preferably with a bank card, in which using only the payment card (1) the payment data (4) of each payment transaction are collected in a reader unit (2) connected by communications technology to a bank computer (3) and are transmitted in a first data stream from the reader unit (2) directly to the bank computer (3) for carrying out the transaction, the payment data (4) or parts thereof (6) are transmitted in a further data stream separate from the first data stream to a separate computer unit (5) and are stored there, wherein in a predeterminable comparative computation to be carried out by the separate computer unit (5) bonus points are allocated to the payment data (4) or parts thereof (6) and are credited by a corresponding entry in a database provided therefor, the user can by using the payment card (1) enquire about the level of credits already achieved by way of an output unit (7) connected by communications technology to the separate computer unit (5), and the payment data (4) transmitted to the separate computer unit (5) or parts thereof (6) are subjected to a plausibility check.

2. Method as claimed in Claim 1, **characterised in that** the crediting of the bonus points is carried out following a successful plausibility check.

3. Method as claimed in Claim 1 or 2, **characterised in that** the transmission of the payment data (4) or parts thereof (6) to the separate computer unit (5) is anonymised.

4. Method as claimed in any one of the preceding claims, **characterised in that** at least the card number is transmitted as payment data (4) or parts thereof (6) to the separate computer unit (5).

5. Method as claimed in Claim 4, **characterised in that** the comparative computation is carried out using the transmitted card number, whereby one credit per payment transaction takes place.

6. Method as claimed in Claim 5, **characterised in that** the level of the credit per payment transaction increases with the number of payment transactions already carried out.

7. Method as claimed in any one of Claims 1 to 4, **characterised in that** the payment amount is additionally transmitted as payment data (4) or parts thereof (6) to the separate computer unit (5).

8. Method as claimed in Claim 7, **characterised in that** the comparative computation is carried out using the payment amount remitted per payment transaction, whereby a credit is made depending upon the level of the payment amount.

9. Method as claimed in any one of the preceding claims, **characterised in that** an enquiry can be made about the level of credits already achieved by giving the card number via a corresponding output unit (7).

10. Method as claimed in any one of the preceding claims, **characterised in that** the collected payment data (4) or parts thereof (6) are statistically evaluated in a second comparative computation.

11. Method as claimed in any one of the preceding claims, **characterised in that** after credits which have been achieved are claimed a corresponding reduction in the credit account is made.

## Revendications

1. Méthode pour fournir et créditer des points de bonus lors du paiement au moyen d'une carte de paiement (1), de préférence un porte-monnaie électronique, dans lequel, lors de l'utilisation de la carte de paiement (1) uniquement, les données de paiement (4) de chaque transaction de paiement sont saisies dans une unité de lecture (2) en communication avec un ordinateur bancaire (3) et transmises directement dans un premier flux de données de l'unité de lecture (2) à l'ordinateur bancaire (3) pour l'exécution de la transaction,
les données de paiement (4) ou des parties de celles-ci (6) sont transmises dans un autre flux de données séparé du premier flux de données à une unité de calcul séparée (5) et mémorisées dans celle-ci,
les données de paiement (4) ou des parties de celles-ci (6) étant associées à des points de bonus lors d'un calcul comparatif pouvant être prédéfini qui doit être exécuté par l'unité de calcul séparée (5) et créditées par une entrée correspondante dans une base de données prévue à cette fin, le montant des crédits déjà obtenus pouvant être consulté par l'utilisateur à l'aide d'une unité de sortie (7) communiquant avec l'unité de calcul séparée (5), en utilisant la carte de paiement (1), et les données de paiement (4) ou des parties de celles-ci (6) transmises à l'unité de calcul séparée (5) étant soumises à un contrôle de plausibilité.

2. Méthode selon la revendication 1, **caractérisée en ce que** les points de bonus sont crédités après que le contrôle de plausibilité a été mené à bien.

3. Méthode selon la revendication 1 ou 2, **caractérisée en ce que** la transmission des données de paiement (4) ou de parties de celles-ci (6) à l'unité de calcul séparée (5) est effectuée de manière anonyme.

4. Méthode selon l'une quelconque des revendications précédentes, **caractérisée en ce que** les données de paiement (4) ou parties de celles-ci (6) transmises à l'unité de calcul séparée (5) comprennent au moins le numéro de carte.

5. Méthode selon la revendication 4, **caractérisée en ce que** le calcul comparatif est effectué à l'aide du numéro de carte transmis, avec un crédit pour chaque transaction de paiement.

6. Méthode selon la revendication 5, **caractérisée en ce que** le montant du crédit pour chaque transaction de paiement augmente avec le nombre de transactions de paiement déjà exécutées.

7. Méthode selon l'une quelconque des revendications 1 à 4, **caractérisée en ce que** les données de paiement (4) ou parties de celles-ci (6) transmises à l'unité de calcul séparée (5) comprennent en outre le montant du paiement.

8. Méthode selon la revendication 7, **caractérisée en ce que** le calcul comparatif est effectué à l'aide du montant payé lors de chaque transaction de paiement, le crédit étant attribué en fonction du montant payé.

9. Méthode selon l'une quelconque des revendications précédentes, **caractérisée en ce que** le montant des crédits déjà obtenus peut être consulté en indiquant le numéro de carte par l'intermédiaire d'une unité de sortie (7) correspondante.

10. Méthode selon l'une quelconque des revendications précédentes, **caractérisée en ce que** les données de paiement (4) ou parties de celles-ci (6) saisies font l'objet d'une évaluation statistique lors d'un deuxième calcul comparatif.

11. Méthode selon l'une quelconque des revendications précédentes, **caractérisée en ce qu'**après l'utilisation des crédits obtenus, le compte de crédit est réduit de manière correspondante.
